# EUROPÄISCHE PATENTANMELDUNG

(11) **EP 2 385 290 A1**
(43) Veröffentlichungstag der Anmeldung: **09.11.2011**
(21) Anmeldenummer: 11164921.6
(22) Anmeldetag: 05.05.2011
(51) Int. Cl.: F16N 13/00, F04B 1/00, F04B 23/04, F04C 11/00

(54) **Schmierstoffpumpe und Maschine mit einer solchen Schmierstoffpumpe**

(30) Priorität: 05.05.2010 DE 202010006498 U
(71) Anmelder: Lincoln GmbH, 69190 Walldorf (DE)
(72) Erfinder: Schmitt, Rainer, 76863 Herxheim (DE); Müller, Tobias, 76703 Kraichtal (DE); Schönfeld, Andreas, 68789 St. Leon-Rot (DE)
(74) Vertreter: KEIL & SCHAAFHAUSEN Patentanwälte

(57) **Zusammenfassung**

Die Erfindung betrifft eine Schmierstoffpumpe (1) zum Fördern von Schmierstoff zu wenigstens einer Schmierstelle sowie eine Maschine, insbesondere eine Ballenpresse, mit wenigstens einer mit Öl zu versorgenden Schmierstelle. Die Schmierstoffpumpe (1) weist eine erste Pumpeneinheit (2) und einen dieser zugeordneten Antrieb auf. Erfindungsgemäß ist zusätzlich eine mit der ersten Pumpeneinheit (2) gekoppelte weitere Pumpeneinheit (3) vorgesehen, die gleichzeitig mit der ersten Pumpeneinheit (2) mittels des Antriebs der ersten Pumpeneinheit (2) antreibbar ist.

## Beschreibung

Die vorliegende Erfindung bezieht sich auf eine Schmierstoffpumpe zum Fördern von Schmierstoff zu wenigstens einer Schmierstelle mit einer Pumpeneinheit mit wenigstens einer Eingangswelle, wenigstens einem Pumpenelement zum Fördern von Schmierstoff und mit Mitteln zum Antrieben des wenigstens einen Pumpenelements mittels der Eingangswelle. Weiter betrifft die Erfindung eine Maschine mit einer derartigen Schmierstoffpumpe.

Eine solche bspw. zur Versorgung von Schmierstellen mit Öl oder dgl. geeignete Pumpe ist bspw. aus der DE 20 2006 005 682 U1 bekannt. In einigen Anwendungsfällen, bspw. bei Ballenpressen, ist es erforderlich, einzelne Schmierstellen mit unterschiedlichen Schmierstoffen, z.B. Öl und Fett, zu versorgen. Hierzu werden bisher separate Pumpen vorgesehen, die jeweils eine eigene Antriebsquelle haben. Dies wird hinsichtlich des erforderlichen Bauraumes und aus Gründen der Anzahl der erforderlichen Komponenten als verbesserungswürdig empfunden.

Aufgabe der Erfindung ist es daher, eine Schmierstoffpumpe der oben genannten Art vorzuschlagen, welche kompakt und einfach aufgebaut sowie zur Versorgung einzelner Schmierstellen mit unterschiedlichen Schmierstoffen geeignet ist.

Diese Aufgabe wird mit einer Pumpe nach Anspruch 1 gelöst. Die Erfindung basiert dabei auf der Idee eine Tandempumpe zu schaffen, welche mit einem einzigen Antrieb unterschiedliche Pumpeneinheiten zur Versorgung von Schmierstellen mit unterschiedlichen Schmierstoffen antreiben kann.

Die erste Pumpeneinheit der erfindungsgemäßen Schmierstoffpumpe ist beispielsweise ähnlich der aus der DE 20 2006 005 682 U1 bekannten Pumpe aufgebaut. Nach einer bevorzugten Ausführungsform der Erfindung ist zusätzlich zu dieser ersten Pumpeneinheit eine mit dieser gekoppelte weitere Pumpeneinheit vorgesehen, die ebenfalls wenigstens ein Pumpenelement zum Fördern von Fett oder dgl. Schmierstoff und weitere Mittel zum Antreiben des wenigstens einen weiteren Pumpenelements aufweist. Dabei sind diese weiteren Mittel der (zweiten) Pumpeneinheit zum Antrieb mit der Eingangswelle der ersten Pumpeneinheit bzw. einer Ausgangswelle der ersten Pumpeneinheit verbunden. Mit anderen Worten ist entweder eine Eingangswelle vorgesehen, welche gleichzeitig beide Pumpeneinheiten antreibt, oder innerhalb der ersten Pumpeneinheit ist eine Ausgangswelle bzw. eine Einrichtung zur Aufnahme der Eingangswelle der zweiten Pumpeneinheit vorgesehen, so dass beide Pumpeneinheiten gemeinsam angetrieben werden können, wenn die Eingangswelle der ersten Pumpeneinheit angetrieben wird.

Die vorliegende Erfindung ist dabei nicht darauf beschränkt, dass in der ersten Pumpeneinheit, welche die (gemeinsame) Eingangswelle aufweist, Öl gepumpt wird, während in der zweiten Pumpeneinheit Fett gepumpt wird. Grundsätzlich sind beide Pumpeneinheiten zum Fördern von Schmierstoffen geeignet. So können mit den beiden Pumpeneinheiten entweder identische oder unterschiedliche Schmierstoffe gefördert werden. Dabei ist es unerheblich, ob bei verschiedenen Schmierstoffen der höher viskose Schmierstoff in der ersten oder einer weiteren Pumpeneinheit gefördert wird.

Die erfindungsgemäße Ausgestaltung der Schmierstoffpumpe als eine Tandempumpe mit nur einer Eingangswelle bzw. nur einem Antrieb führt zu einer kompakten Bauweise und ist im Vergleich zu Lösungen mit verschiedenen Schmierstoffpumpen einfacher zu installieren. Darüber hinaus ergeben sich auch Kostenvorteile, da nur ein einziger Antrieb vorzusehen ist. Dies kann mechanisch oder auf andere geeignete Weise erfolgen.

Um den Austausch der einzelnen Pumpeneinheiten zu erleichtern, wird es bevorzugt, wenn jede der Pumpeneinheiten ein separates Gehäuse aufweist. Hierbei können die Gehäuse der Pumpeneinheiten zu einer gemeinsamen Baueinheit miteinander verbunden werden. Dies erfolgt jedoch bevorzugt derart, dass die Gehäuse zerstörungsfrei voneinander lösbar sind, beispielsweise über Schraubverbindungen. Dabei wird es besonders bevorzugt, wenn die Gehäuse zur Montage aneinander angepasst sind, beispielsweise indem die beiden Pumpeneinheiten einander zugeordnete Verbindungsmittel, wie Durchgangsöffnungen für Schrauben, Sack- bzw. Gewindelöcher oder dgl. aufweisen. Wenn jede der beiden Pumpeneinheiten ein separates Gehäuse aufweist, kann für die erfindungsgemäße Tandem-Schmierstoffpumpe auch weitestgehend auf bestehende Komponenten zurückgegriffen werden.

Es wird bevorzugt, wenn in wenigstens eine der Pumpeneinheiten ein Schmierstoffreservoir integriert ist. Dies bietet sich insbesondere für eine Pumpeneinheit zur Förderung von Fett an. Alternativ ist es jedoch auch möglich, dass wenigstens eine der Pumpeneinheiten ein separates Schmierstoffreservoir aufweist, welches über eine geeignete Schmierstoffleitung mit der jeweiligen Pumpeneinheit verbunden ist. Diese Lösung wird häufig für das Fördern von Öl an verschiedene Schmierstellen bevorzugt.

In Weiterbildung des Erfindungsgedankens ist es vorgesehen, dass die erste Pumpeneinheit einen Verbindungsbereich zum Anschluss der weiteren Pumpeneinheit aufweist, wobei die weitere Pumpeneinheit sich in wenigstens einer Richtung nicht über den Verbindungsbereich hinaus erstreckt. Mit anderen Worten weist die erste Pumpeneinheit einen Bereich auf, der im aneinander montierten Zustand der beiden Pumpeneinheiten nicht von der weiteren Pumpeneinheit überdeckt wird. Wenn die Eingangswelle außerhalb dieses Verbindungsbereichs in der ersten Pumpeneinheit angeordnet ist, ist eine besonders platzsparende Bauweise möglich, ohne dass die weitere Pumpeneinheit den Bauraum für die Eingangswelle der ersten Pumpeneinheit verdeckt.

Für die Zugänglichkeit der ggf. mehreren Pumpenelemente wird es bevorzugt, wenn diese auf der jeweils anderen Pumpeneinheit abgewandten Seite einer Pumpeneinheit angeordnet sind. Hierdurch lassen sich einzelne Pumpenelemente austauschen, ohne dass die gesamte Schmierstoffpumpe aus beiden Pumpeneinheiten demontiert werden muss. Zudem bietet dies Vorteile hinsichtlich der Anschlussmöglichkeiten für die von den Pumpenelementen wegführenden Schmierstoffleitungen. Auch eine Überwachung der Funktion der Pumpenelemente wird auf diese Weise erleichtert.

Die Mittel zum Antreiben eines der Pumpenelemente können beispielsweise eine Taumelscheibe und/oder einen Exzenter umfassen.

Es hat sich als besonders vorteilhaft erwiesen, wenn die erste Pumpeneinheit eine weitere Eingangswelle aufweist, der einen mit den Mitteln zum Antreiben der Pumpenelemente koppelbares Getriebe zugeordnet ist. Auf diese Weise ist es möglich, dass abhängig davon, über welche der beiden Eingangswellen die erfindungsgemäße Tandem-Schmierstoffpumpe angetrieben wird, über die unterschiedlichen Übersetzungen die Pumpeneinheiten mit unterschiedlicher Geschwindigkeit betätigt werden.

Die Erfindung betrifft weiter eine Maschine, wie beispielsweise eine Ballenpresse, mit wenigstens einer mit Öl zu versorgenden Schmierstelle und wenigstens einer mit Fett zu versorgenden Schmierstelle. Hierzu weist die erfindungsgemäße Maschine wenigstens eine Tandem-Schmierstoffpumpe der oben genannten Art auf, um die Schmierstellen mit Öl bzw. Fett zu versorgen. Grundsätzlich können bei der erfindungsgemäßen Maschine auch andere Schmierstoffe als Öl oder Fett eingesetzt werden.

Die Erfindung wird nachfolgend unter Bezugnahme auf die Zeichnungen näher erläutert. Dabei bilden alle beschriebenen und/oder bildlich dargestellten Merkmale für sich oder in beliebiger sinnvoller Kombination den Gegenstand der Erfindung, unabhängig von ihrer Zusammenfassung in den Ansprüchen oder deren Rückbezügen.

Es zeigen schematisch:
- Fig. 1: in Perspektivansicht eine erfindungsgemäße Schmierstoffpumpe vor dem Zusammenbau,
- Fig. 2: eine weitere Perspektivansicht der Schmierstoffpumpe nach Fig. 1 vor dem Zusammenbau,
- Fig. 3: in Seitenansicht die Schmierstoffpumpe nach den Fig. 1 und 2 in zusammengebautem Zustand und
- Fig. 4: in Schnittansicht eine Pumpeneinheit ähnlich der nach den Fig. 1 bis 3.

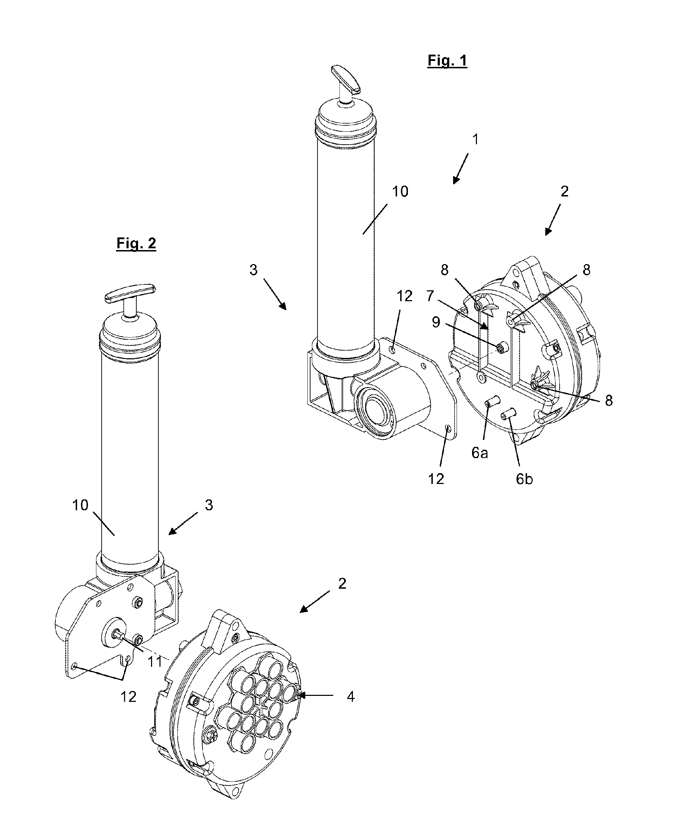

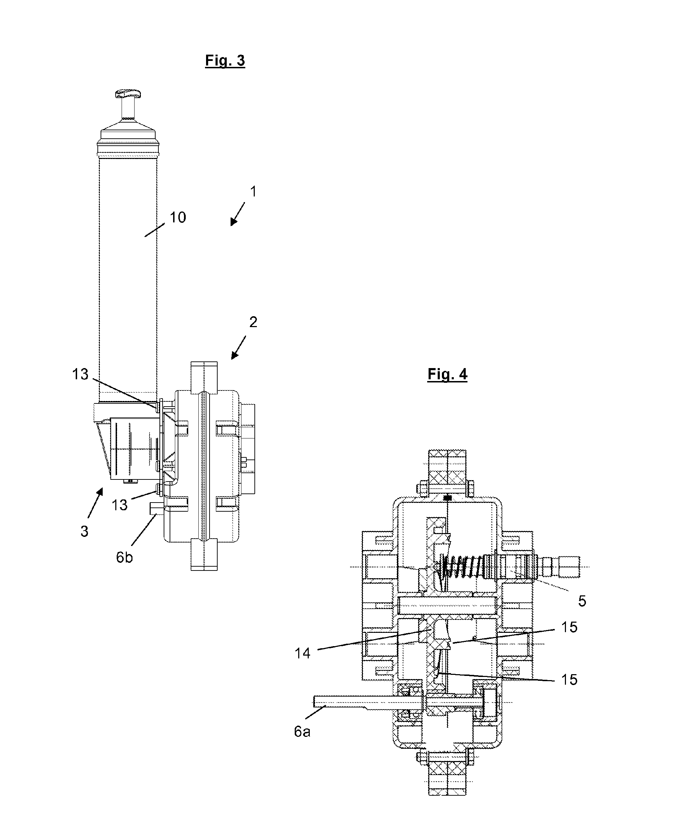

In den Fig. 1 bis 3 ist eine Tandem-Schmierstoffpumpe 1 dargestellt, die im Wesentlichen aus zwei Pumpeneinheiten 2, 3 besteht. Die erste Pumpeneinheit 2 ähnelt dabei der aus der DE 20 2006 005 682 U1 bekannten Schmiermittelpumpe, auf welche Bezug genommen wird. Auf einer Außenseite weist diese Pumpeneinheit 2 zwölf Öffnungen 4 auf, in welche, wie in Fig. 4 angedeutet, jeweils ein Pumpenelement 5 einbringbar ist.

In der Ausführungsform nach den Fig. 1 bis 3 ist die Pumpeneinheit 2 mit zwei Eingangswellen 6a, 6b versehen, welche auf der den Öffnungen 4 für die Pumpenelemente 5 gegenüberliegenden Seite aus der Pumpeneinheit 2 herausragen. Jede dieser Eingangswellen 6a, 6b ist mit einem in den Figuren nicht dargestellten Antrieb verbindbar. Im Inneren der Pumpeneinheit 2 sind den Eingangswellen 6a, 6b Zahnräder eines Getriebes zugeordnet, so dass die Pumpeneinheit 2 mit unterschiedlicher Geschwindigkeit arbeitet, abhängig davon, welche der beiden Eingangswellen 6a, 6b angetrieben wird. Es wird somit immer nur eine der beiden Antriebswellen 6a, 6b im Betrieb benutzt.

Oberhalb der beiden Antriebswellen 6a, 6b ist in der Darstellung der Fig. 1 ein Verbindungsbereich 7 vorgesehen, der zum Anschluss der weiteren Pumpeneinheit 3 mehrere Verbindungselemente in Form von Gewindebohrungen 8 aufweist. Weiter ist in diesem Verbindungsbereich 7 ein Hohlwellenzapfen 9 vorgesehen, welcher bei Antrieb einer der beiden Eingangswellen 6a oder 6b über die Ausgangswelle 9 der ersten Pumpeneinheit 2 angetrieben wird.

Die zweite Pumpeneinheit 3 ist mit einem integrierten Reservoir 10 für Schmierstoff ausgerüstet. Eine Eingangswelle 11 der Pumpeneinheit 3 ist mit dem Hohlwellenzapfen 9 der ersten Pumpeneinheit 2 verbindbar, so dass bei Antrieb einer der Eingangswellen 6a oder 6b der ersten Pumpeneinheit 2 auch die zweite Pumpeneinheit 3 über den Hohlwellenzapfen 9 und die Eingangswelle 11 angetrieben wird. In der zweiten Pumpeneinheit 3 ist weiter eine Verbindungsplatte vorgesehen, in welcher mehrere Öffnungen 12 ausgebildet sind. Die Öffnungen 12 sind in ihrer Anordnung auf die Positionen der Gewindebohrungen 8 der ersten Pumpeneinheit abgestimmt, so dass die beiden Pumpeneinheiten 2, 3 mittels Schrauben 13 verbindbar sind.

Statt eines Hohlwellenzapfens 9 kann die erste Pumpeneinheit 2 auch eine Ausgangswelle oder eine Wellenaufnahme aufweisen, abhängig davon, ob an der weiteren Pumpeneinheit 3 eine Wellenaufnahme oder eine aus der weiteren Pumpeneinheit 3 herausstehende Eingangswelle vorgesehen sind.

Im Inneren der ersten Pumpeneinheit 2 ist, wie in der Ausführungsform nach Fig. 4 gezeigt, eine Taumelscheibe 14 vorgesehen, in welcher zwei konzentrische Laufbahnen 15 mit variierender Höhe vorgesehen sind, so dass bei einer Rotation der Taumelscheibe 14 abwechselnd die in den unterschiedlichen Öffnungen 4 aufgenommenen Pumpenelemente 5 betätigt werden können.

In der weiteren Pumpeneinheit 3 können ebenfalls ein oder mehrere Pumpenelemente vorgesehen sein, welche beispielsweise über einen Exzenter (nicht gezeigt) angetrieben werden.

Grundsätzlich ist es möglich, dass in einer oder beiden Pumpeneinheiten 2, 3 Zahnradgetriebe derart vorgesehen sind, dass die Rotationsgeschwindigkeit der Eingangswellen 6a bzw. 6b sich von der Rotationsgeschwindigkeit bspw. der Taumelscheibe 14 unterscheidet. Weiter können auch die Mittel zum Antreiben der Pumpenelemente, d.h. bspw. Exzenter, Taumelscheiben oder dgl., in den beiden Pumpeneinheiten 2, 3 mit unterschiedlicher oder gleicher Rotationsgeschwindigkeit betätigt werden. Auf diese Weise lässt sich mittels geeigneter Getriebewahl auch die Fördergeschwindigkeit in den beiden Pumpeneinheiten 2, 3 individuell einstellen.

Die in den Figuren dargestellte Tandem-Schmierstoffpumpe 1 eignet sich aufgrund ihrer geringen Herstellungskosten und des geringen Platzverbrauchs zum Einsatz in unterschiedlichen Maschinen, bei welchen der Bedarf nach einer Versorgung mit unterschiedlichen Schmierstoffen besteht. Eine bevorzugte Anwendung liegt dabei bspw. in Ballenpressen.

### Bezugszeichenliste:

- 1: Tandem-Schmierstoffpumpe
- 2: erste Pumpeneinheit
- 3: zweite Pumpeneinheit
- 4: Öffnung
- 5: Pumpenelement
- 6a, 6b: Eingangswelle
- 7: Verbindungsbereich
- 8: Gewindebohrung
- 9: Hohlwellenzapfen
- 10: Reservoir
- 11: Eingangswelle
- 12: Öffnung
- 13: Schraube
- 14: Taumel-Scheibe
- 15: Laufbahn

## Patentansprüche

1. Schmierstoffpumpe zum Fördern von Schmierstoff zu wenigstens einer Schmierstelle mit einer ersten Pumpeneinheit (2) und einem dieser zugeordneten Antrieb, **dadurch gekennzeichnet, dass** zusätzlich eine mit der ersten Pumpeneinheit (2) gekoppelte weitere Pumpeneinheit (3) vorgesehen ist, die gleichzeitig mit der ersten Pumpeneinheit (2) mittels des Antriebs der ersten Pumpeneinheit (2) antreibbar ist.

2. Schmierstoffpumpe, insbesondere nach Anspruch 1, zum Fördern von Schmierstoff zu wenigstens einer Schmierstelle mit einer ersten Pumpeneinheit (2) mit wenigstens einer Eingangswelle (6a, 6b), wenigstens einem ersten Pumpenelement (5) zum Fördern von Öl oder dgl. Schmierstoff und mit ersten Mitteln (14, 15) zum Antrieben des wenigstens einen ersten Pumpenelements (5) mittels der Eingangswelle (11), **dadurch gekennzeichnet, dass** zusätzlich eine mit der ersten Pumpeneinheit (2) gekoppelte weitere Pumpeneinheit (3) vorgesehen ist, die wenigstens ein weiteres Pumpenelement zum Fördern von Fett oder dgl. Schmierstoff und weitere Mittel zum Antreiben des wenigstens einen weiteren Pumpenelements aufweist, wobei diese weiteren Mittel zum Antrieb mit der Eingangswelle (6a, 6b) der ersten Pumpeneinheit (2) oder einer Ausgangswelle (9) der ersten Pumpeneinheit (2) verbunden ist.

3. Schmierstoffpumpe nach Anspruch 1 oder 2, **dadurch gekennzeichnet, dass** jede der Pumpeneinheiten (2, 3) ein separates Gehäuse aufweist, wobei die Gehäuse der Pumpeneinheiten (2, 3), insbesondere lösbar, zu einer Baueinheit verbindbar sind.

4. Schmierstoffpumpe nach einem der vorhergehenden Ansprüche, **dadurch gekennzeichnet, dass** die beiden Pumpeneinheiten (2, 3) einander zugeordnete Verbindungsmittel (8, 12, 13) aufweisen.

5. Schmierstoffpumpe nach einem der vorhergehenden Ansprüche, **dadurch gekennzeichnet, dass** in die weitere Pumpeneinheit (3) ein Schmierstoffreservoir (10) integriert ist, und dass der ersten Pumpeneinheit (2) ein separates Schmierstoffreservoir zugeordnet ist, welches mit der ersten Pumpeneinheit (2) über eine Schmierstoffleitung verbindbar ist.

6. Schmierstoffpumpe nach einem der vorhergehenden Ansprüche, **dadurch gekennzeichnet, dass** die erste Pumpeneinheit (2) einen Verbindungsbereich (7) zum Anschluss der weiteren Pumpeneinheit (3) aufweist, wobei die weitere Pumpeneinheit (3) sich in wenigstens einer Richtung nicht über den Verbindungsbereich (7) hinaus erstreckt, und dass die Eingangswelle (6a, 6b) außerhalb des Verbindungsbereichs (7) in der ersten Pumpeneinheit (2) angeordnet ist.

7. Schmierstoffpumpe nach einem der vorhergehenden Ansprüche, **dadurch gekennzeichnet, dass** das wenigstens eine Pumpenelement (5) der ersten Pumpeneinheit (2) auf der der weiteren Pumpeneinheit (3) abgewandten Seite der ersten Pumpeneinheit (2) angeordnet ist.

8. Schmierstoffpumpe nach einem der vorhergehenden Ansprüche, **dadurch gekennzeichnet, dass** die Mittel zum Antrieben eines der Pumpenelemente (5) eine Taumelscheibe (14) aufweisen.

9. Schmierstoffpumpe nach einem der vorhergehenden Ansprüche, **dadurch gekennzeichnet, dass** die Mittel zum Antrieben eines der Pumpenelemente einen Exzenter aufweisen.

10. Schmierstoffpumpe nach einem der vorhergehenden Ansprüche, **dadurch gekennzeichnet, dass** die erste Pumpeneinheit (2) eine weitere Eingangswelle (6b) aufweist, der ein mit den Mitteln (14, 15) zum Antrieben der Pumpenelemente (5) koppelbares Getriebe zugeordnet ist.

11. Maschine, insbesondere Ballenpresse, mit wenigstens einer mit Öl zu versorgenden Schmierstelle, wenigstens einer mit Fett zu versorgenden Schmierstelle und einer Schmierstoffpumpe (1) nach einem der vorhergehenden Ansprüche zur Versorgung der Schmierstellen mit Öl bzw. Fett.
